(19) Europäisches Patentamt

European Patent Office

Office européen des brevets

(11) Veröffentlichungsnummer : **0 147 822 B2**

(12) **NEUE EUROPÄISCHE PATENTSCHRIFT**

(45) Veröffentlichungstag der neuen Patentschrift :
**13.05.92 Patentblatt 92/20**

(51) Int. Cl.[5] : **G01R 31/12**

(21) Anmeldenummer : **84116064.1**

(22) Anmeldetag : **21.12.84**

(54) **Vorrichtung zum Feststellen von Teilentladungen.**

(30) Priorität : **28.12.83 DE 3347275**

(43) Veröffentlichungstag der Anmeldung :
**10.07.85 Patentblatt 85/28**

(45) Bekanntmachung des Hinweises auf die
Patenterteilung :
**26.04.89 Patentblatt 89/17**

(45) Bekanntmachung des Hinweises auf die
Entscheidung über den Einspruch :
**13.05.92 Patentblatt 92/20**

(84) Benannte Vertragsstaaten :
**AT BE CH DE FR LI SE**

(56) Entgegenhaltungen :
**IEEE TRANSACTIONS ON INSTRUMENTA-
TION AND MEASUREMENT, Band IM-31, Nr. 1,
März 1982, Seiten 49-52, IEEE, New York, US;
G.H.VAILLANCOURT u.a.: "Simultaneous measurement of partial discharge and radiointerference voltage"**

(56) Entgegenhaltungen :
**ELEKTROTECHNIK & MASCHINENBAU, Jahrgang 95, Nr. 12, Dezember 1978, Seiten
561-564, Wien, AT; A. LESCHANZ u.a.:
"EinTeilentladungsmessplatz für Grosstransformatoren"
ELEKTROTECHNIK & MASCHINENBAU, Jahrgang 95, Nr. 4, April 1978, Seiten 193-198,
Wien, AT; J. MOELLER: "Zuverlässigkeit von-
Messwandlern"
Programm des 50. VDE Seminars über Teilentladungen (TE) in Betriebsmitteln der Energietechnik 30.11.82 bis 02.12.82, Seiten84-85,
Deutsches Museum,München (DE) Beitrag
2.9: Teilentladungen an fabrikfertigen Schaltanlagen, Seiten 2,7 und Bilder 12-14,Dipl.Ing.
Claus Neumann**

(73) Patentinhaber : **MWB MESSWANDLER-BAU
AG
Nürnberger Strasse 199
W-8600 Bamberg (DE)**

(72) Erfinder : **Brand, Uwe, Dr.-Ing.
Anwanderstrasse 31
W-8600 Bamberg (DE)**

(74) Vertreter : **Hufnagel, Walter, Dipl.-Ing.,
Dipl.-Wirtsch.-Ing. et al
Dorner & Hufnagel Patentanwälte Bad
Brückenauer Str. 19
W-8500 Nürnberg 90 (DE)**

EP 0 147 822 B2

## Beschreibung

Die vorliegende Erfindung betrifft eine Vorrichtung zum Feststellen von Teilentladungen bei einer mehrphasigen, metallgekapselten Hochspannungs-Schaltanlage mit einem an diese Schaltanlage über einen Mehrphasen-Umsteller an die einzelnen Phasen anschließbaren Prüftransformator und mit einem Kopplungskondensator zum Herstellen des Rückschlusses zwischen der zu prüfenden Phase und einer Meßimpedanz, wobei als Kopplungskondensator die eine oder alle nicht unter Spannung stehenden Phasen der Schaltanlage dienen, über deren Kapazität zur jeweils spannungsführenden Phase die Teilentladungsimpulse auskoppelbar sind.

Aus der DE-B-15 91 853 ist ein Meßverfahren zum Feststellen von Teilentladungen bekannt, bei dem der Kopplungskondensator zum Vermeiden von Fehlerquellen infolge von Einstreuungen innerhalb der Metallkapselung des entsprechenden Schaltanlagenteils vorgesehen ist. Auch ist es aus dieser Schutzrechtsschrift bekannt, als Kopplungskondensator den Kondensatorbelag der Durchführung oder die Meßkapazität eines vorhandenen Spannungswandlers zu verwenden. Schließlich ist auch bereits darauf hingewiesen, daß dabei ein ungünstiges Verhältnis zwischen der Kapazität des Kopplungskondensators in der Größenordnung von etwa 100 pF und der Kapazität der auf Teilentladung zu prüfenden Phasenleiter in der Größenordnung von beispielsweise 5 nF vorliegt.

Ferner sind aus einem Vortrag vom 2. Dezember 1982 im Deutschen Museum in München anläßlich des "50. VDE-Seminars über Teilentladungen (TE) in Betriebsmitteln der Energietechnik ..." ein Meßverfahren und eine Schaltungsanordnung zum Feststellen von Teilentladungen bei einer mehrphasigen, metallgekapselten Hochspannungs-Schaltanlage bekannt, bei denen die Kapazitäten der beiden nicht an Hochspannung liegenden Phasen als Koppelkapazität genutzt werden. Hierfür sind diese Phasen an geeigneter Stelle isoliert durch die Kapselung geführt, wofür sich besonders gut isoliert eingebaute Erdungsschalter oder Prüfdeckel mit isoliert eingesetzten Steckern eignen.

Der Erfindung liegt die Aufgabe zugrunde, die Vorrichtung der eingangs erwähnten Art so zu gestalten, daß die Meßvorgänge zum Feststellen von Teilentladungen auf einfache Weise und ohne großen Aufwand durchgeführt werden können.

Diese Aufgabe wird nach den Merkmalen des Kennzeichens des Anspruchs 1 dadurch gelöst, daß der Mehrphasen-Umsteller eine der Anzahl der Phasen entsprechende Anzahl von Schaltarmen aufweist, die um einen durch die Anzahl der Phasen geteilten Vollwinkel entsprechenden Winkel gegeneinander versetzt sind, daß jedem Schaltarmkontakt ein fester Prüfkontakt zugeordnet ist, daß einer der Schaltarme leitend mit einem Prüfspannungsanschluß verbunden ist und die anderen Schaltarme von diesem und gegeneinander isoliert sind, und daß jedem isolierten Schaltarm ein mit diesem leitend verbundener Verbindungskontakt zugeordnet ist, der je nach der Stellung der Schaltarme mit einem neben jedem Prüfkontakt vorgesehenen Hilfskontakt kontaktierbar ist.

Diese Aufgabe wird alternativ dazu nach den Merkmalen des Kennzeichens des nebengeordneten Anspruchs 4 dadurch gelöst, daß der Mehrphasen-Umsteller nur einen Schaltarm aufweist, der mit einem Prüfspannungsanschluß leitend verbunden ist und die den einzelnen Phasen zugeordneten Prüfkontakte entsprechend der jeweiligen Stellung leitend mit dem Prüfspannungsanschluß verbindet, und daß jedem Prüfkontakt eine hydraulisch, magnetisch oder pneumatisch arbeitende Schalteinrichtung zugeordnet ist, die mittels der Hilfskontakte die jeweiligen Phasen der zu prüfenden Schaltanlage mit der Meßimpedanz verbindet.

Die mit der Erfindung erzielten Vorteile bestehen insbesondere darin, daß die Meßvorgänge zum Feststellen von Teilentladungen auf einfache Weise und ohne großen Aufwand automatisiert werden können. Ferner ist gewährleistet, daß die Kopplungskapazität immer in der Größenordnung der Kapazität des zu messenden Schaltanlagenteils liegt, so daß auch große Anlagen mit hoher Genauigkeit geprüft werden können, wobei die Empfindlichkeit der Teilentladungsmessung praktisch unabhängig von der Größe der zu prüfenden Anlage ist, weil die Kopplungskapazität in einem festen Verhältnis zur Kapazität des Prüflings steht. Außerdem ist ein besonderer Kopplungskondensator oder ein anderes zur kapazitiven Auskopplung geeignetes Gerät nicht erforderlich.

Weitere vorteilhafte Einzelheiten der Erfindung sind in den Unteransprüchen angegeben und werden nachfolgend an Hand der in der Zeichnung dargestellten Ausführungsbeispiele beschrieben. Dabei zeigen:

Fig. 1 ein Schaltschema einer erfindungsgemäßen Prüfvorrichtung mit drei auf einer zentralen Achse angeordneten Schaltarmen,

Fig. 2 eine erfindungsgemäße Prüfvorrichtung entsprechend Fig. 1 in der Seitenansicht,

Fig. 3 ein Schaltschema einer erfindungsgemäßen Prüfvorrichtung mit mechanisch, magnetisch oder pneumatisch angetriebenen Kontakten und

Fig. 4 eine erfindungsgemäße Prüfvorrichtung entsprechend Fig. 3 in der Seitenansicht.

Mit 1 ist ein Prüftransformator bezeichnet, dessen Hochspannungswicklung 2 einseitig an Masse liegt und mit dem Hochspannungspol an einen als Dreiphasenumsteller ausgebildeten Mehrphasenumsteller 3 angeschlossen ist. Letzterer besitzt drei gemeinsam um eine zentrale Achse 4 drehbare Schaltarme 5, 6, 7, von denen beispielsweise der erstgenannte Schaltarm 5 leitend mit dem Prüfspannungsanschluß verbunden ist. Die beiden anderen Schaltarme 6, 7 sind vom Prüfspannungsanschluß 8 und voneinander beispielsweise durch Isolatoren 9 isoliert.

Die Schaltarme 5, 6, 7 sind um jeweils 120° gegeneinander versetzt angeordnet. Ihren Endkontakten $E_5$, $E_6$, $E_7$ stehen im Dreiphasenumsteller 3 fest angeordnete Prüfkontakte $P_R$, $P_S$, $P_T$ gegenüber, die zwecks Überprüfung einer Schaltanlage mit den Anlageleitern R bzw. S bzw. T elektrisch leitend verbunden sind.

Neben den Prüfkontakten $P_R$, $P_S$ und $P_T$ sind jeweils im gleichen Abstand vom entsprechenden Prüfkontakt Hilfskontakte $H_R$, $H_S$, $H_T$ vorgesehen, die mit je einem Verbindungskontakt $V_6$ bzw. $V_7$ eines der isolierten Schaltarme 6 bzw. 7 kontaktiert werden können.

Die Hilfskontakte $H_R$, $H_S$, $H_T$ sind an einen Meßpunkt M geführt, der mit einer Teilentladungs-Meßvorrichtung 10 verbunden ist.

Die Messung erfolgt mit dieser Teilentladungs-Meßvorrichtung 10 wie folgt:

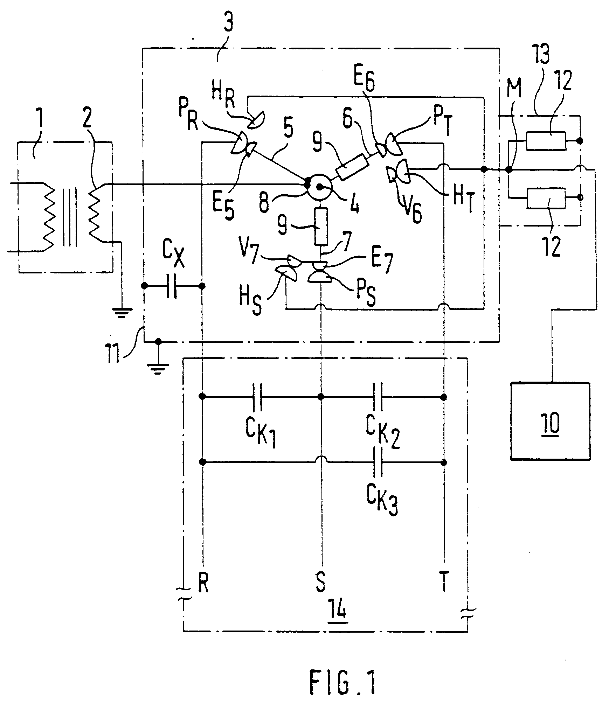

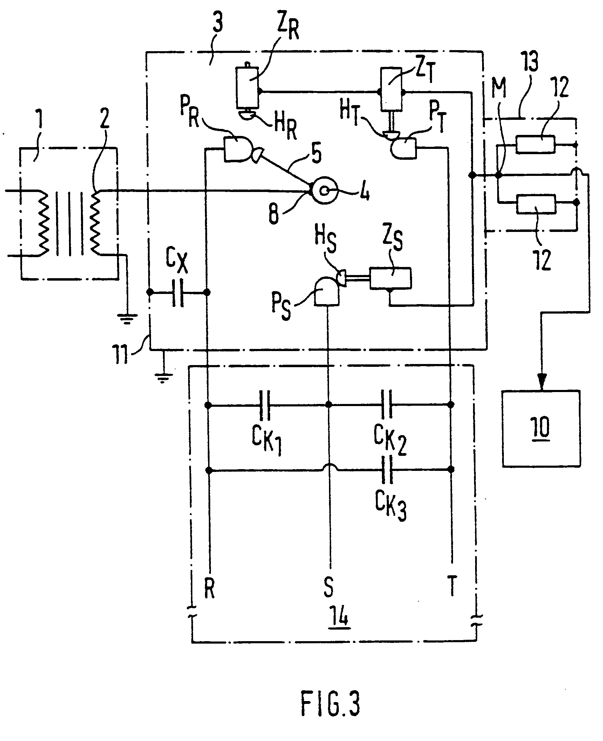

Es sei angenommen, der Dreiphasenumsteller 3 nehme die in der Fig. 1 gezeichnete Stellung ein. Dabei wird die Phase R der Schaltanlage auf Teilentladung geprüft. Dies ist durch die zwischen der Phase R und dem an Masse liegenden Gehäuse 11 eingezeichnete Kapazität $C_X$ angedeutet. Weiterhin sind noch die zwischen den einzelnen Phasen R, S, T vorhandenen und als Kopplungskapazitäten verwendeten Schaltanlagenkapazitäten $C_{K1}$, $C_{K2}$ und $C_{K3}$ vorhanden. Die Kapazität $C_X$ ist hierbei also immer im Größenordnungsbereich der Kapazitäten $C_{K1}$, $C_{K2}$ und $C_{K3}$, da sich all diese Kapazitäten entsprechend der Größe der Schaltanlage einstellen.

Am Meßpunkt M ist noch wenigstens eine Meßimpedanz 12 nach Masse geschaltet. Die im nach Masse geschalteten Gehäuse 13 vorhandene Schaltung bildet einen Vierpol, über den das Meßsignal an die Teilentladungs-Meßvorrichtung 10 geleitet wird.

Durch das erfindungsgemäße Meßverfahren. bei dem die Anlagenkapazitäten $C_{K1}$, $C_{K2}$ und $C_{K3}$ als Kopplungskapazitäten zur Meßwertbildung verwendet werden, erhält man sehr genaue Meßergebnisse, wobei eine Beeinflussung durch Einstreuungen ebenfalls ausgeschaltet werden kann, wenn die Meßimpedanzen ebenfalls inner-halb des geerdeten Gehhäuses 13 untergebracht sind. Bei diesem Meßverfahren ist also lediglich ein Mehrphasenumsteller mit Hilfskontakten erforderlich, jedoch sind keinerlei zusätzliche Kopplungskondensatoren notwendig.

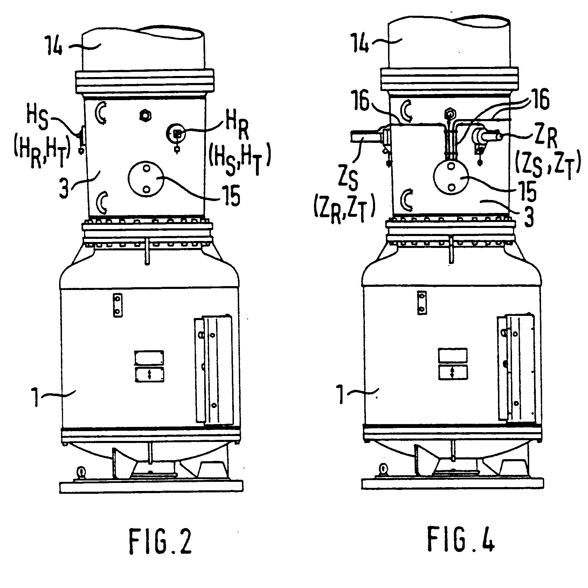

Eine Vorrichtung zur Durchführung des Verfahrens besteht gemäß Fig. 2 aus dem Prüftransformator 1, dem mit diesem fest verbundenen Dreiphasenumsteller 3 und der mit letzterem fest verbundenen, zu prüfenden Schaltanlage 14.

Die Schaltarme 5, 6, 7 des Dreiphasenumstellers 3 können über ein Handrad 15 von außen jeweils in eine um 120° gedrehte Schaltstellung gebracht werden, wobei die Schaltarme 5, 6, 7, wie oben beschrieben, mit den entsprechenden Gegenkontakten zusammenwirken. Die Schaltarme 5, 6, 7 sind dabei vorzugsweise schräg nach auswärts gerichtet. Die gemeinsame Drehachse 4 ist unmittelbar in einem Stützisolator an der Kopplungsstelle zum Prüftransformator 1 befestigt oder in einem Getriebeteil, das seinerseits im Stützisolator befestigt ist.

In den Fig. 3 und 4 ist ein anderes Schaltschema bzw. eine andere Ausführung des erfindungsgemäßen Dreiphasenumstellers dargestellt. Die gleichen Teile sind mit den gleichen Bezugsziffern wie in den Fig. 1 und 2 versehen.

Bei dieser Ausführung besitzt der mechanische Schalter nur noch einen Kontaktarm 5, der an einer drehbaren Achse 4 befestigt ist, die direkt mit dem Hochspannungserzeuger, dem Prüftransformator 1, verbunden ist. Je nach Stellung des aus leitfähigem Material bestehenden Schaltarmes 5 wird eine der drei Prüflingsphasen über die Prüfkontakte $P_R$, $P_S$, $P_T$ mit dem Prüfspannungsanschluß 8 verbunden.

Neben den Prüfkontakten $P_R$, $P_S$, $P_T$ sind jeweils mit dem Meßpunkt bzw. der Meßimpedanz 12 verbundene Zusatzschalteinrichtungen $Z_R$, $Z_S$, $Z_T$ angeordnet, die mittels eines hydraulischen, magnetischen oder pneumatischen Antriebes über die Hilfskontakte $H_R$, $H_S$, $H_T$ mit den Prüfkontakten $P_R$, $P_S$, $P_T$ kontaktiert werden können.

Die Messung der Teilentladungsintensität des Prüflings erfolgt derart, daß z. B. der Prüfkontakt $P_R$ über den Schaltarm 5 mit dem Prüftransformator 1 verbunden und somit an Prüfspannung gelegt wird. Über eine entsprechende Steuerung werden die Hilfsschalter $H_S$ und $H_T$ geschlossen und verbinden diese beiden Phasen des Prüflings mit der bzw. den Meßimpedanzen 12 und der Teilentladungsmeßvorrichtung 10.

Der Antrieb des Schaltarmes 5 erfolgt wie bei der Ausführung gemäß Fig. 2 über ein Handrad 15 mit einer hydraulischen, magnetischen oder pneumatischen Schalteinrichtung, die derart ausgebildet ist, daß eine Synchronisation der Schalterstellungen möglich ist. Die entsprechenden Schaltleitungen sind in Fig. 4 mit 16 bezeichnet.

Die Vorteile, wie sie vorstehend in Verbindung mit dem Ausführungsbeispiel gemäß den Fig. 1 und 2 angegeben worden sind, gelten auch für die Ausführungsvariante gemäß den Fig. 3 und 4.

Anstelle des beschriebenen Dreiphasensystems kann auch ein Mehrphasensystem mit zwei oder mehr als drei Leitern vorgesehen sein. Der Mehrphasenumsteller 3 ist dann entsprechend der Zahl der vorhandenen Phasen auszugestalten.

## Patentansprüche

1. Vorrichtung zum Feststellen von Teilentladungen bei einer mehrphasigen, metallgekapselten Hochspannungs-Schaltanlage mit einem an diese Schaltanlage (14) über einen Mehrphasen-Umsteller (3) an die einzelnen Phasen (R, S, T) anschließbaren Prüftransformator (1) und mit einem Kopplungskondensator ($C_{K1}$, $C_{K3}$) zum Herstellen des Rückschlusses zwischen der zu prüfenden Phase (R) und einer Meßimpedanz (12), wobei als Kopplungskondensator ($C_{K1}$, $C_{K3}$) die eine oder alle nicht unter Spannung stehenden Phasen (S, T) der Schaltanlage (14) dienen, über deren Kapazität zur jeweils spannungsführenden Phase (R) die Teilentladungsimpulse auskoppelbar sind, **dadurch gekennzeichnet**, daß der Mehrphasen-Umsteller (3) eine der Anzahl der Phasen (R, S, T) entsprechende Anzahl von Schaltarmen (5, 6, 7) aufweist, die um einen durch die Anzahl der Phasen geteilten Vollwinkel entsprechenden Winkel gegeneinander versetzt sind, daß jedem Schaltarmkontakt ($E_5$, $E_6$, $E_7$) ein fester Prüfkontakt ($P_R$, $P_S$, $P_T$) zugeordnet ist, daß einer der Schaltarme (5) leitend mit einem Prüfspannungsanschluß (8) verbunden ist und die anderen Schaltarme (6, 7) von diesem und gegeneinander isoliert sind, und daß jedem isolierten Schaltarm (6, 7) ein mit diesem leitend verbundener Verbindungskontakt ($V_6$, $V_7$) zugeordnet ist, der je nach der Stellung der Schaltarme (5, 6, 7) mit einem neben jedem Prüfkontakt ($P_R$, $P_S$, $P_T$) vorgesehenen Hilfskontakt ($H_R$, $H_S$, $H_T$) kontaktierbar ist.

2. Vorrichtung nach Anspruch 1, dadurch gekennzeichnet, daß die Schaltarme (5, 6, 7) vom Prüfspannungsanschluß (8) aus gesehen nach auswärts gerichtet sind.

3. Vorrichtung nach Anspruch 1 oder 2, dadurch gekennzeichnet, daß die Schaltarme (5, 6, 7) um eine in einem Stützisolator (16) gelagerte Achse (4) drehbar sind.

4. Vorrichtung zum Feststellen von Teilentladungen bei einer mehrphasigen, metallgekapselten Hochspannungs-Schaltanlage mit einem an diese Schaltanlage (14) über einen Mehrphasen-Umsteller (3) an die einzelnen Phasen (R, S, T) anschließbaren Prüftransformator (1) und mit einem Kopplungskondensator ($C_{K1}$, $C_{K3}$) zum Herstellen des Rückschlusses zwischen der zu prüfenden Phase (R) und einer Meßimpedanz (12), wobei als Kopplungskondensator ($C_{K1}$, $C_{K3}$) die eine oder alle nicht unter Spannung stehenden Phasen (S, T) der Schaltanlage (14) dienen, über deren Kapazität zur jeweils spannungsführenden Phase (R) die Teilentladungsimpulse auskoppelbar sind, **dadurch gekennzeichnet** , daß der Mehrphasen-Umsteller (3) nur einen Schaltarm (5) aufweist, der mit einem Prüfspannungsanschluß (8) leitend verbunden ist und die den einzelnen Phasen (R, S, T) zugeordneten Prüfkontakte ($P_R$, $P_S$, $P_T$) entsprechend der jeweiligen Stellung leitend mit dem Prüfspannungsanschluß (8) verbindet, und daß jedem Prüfkontakt ($P_R$, $P_S$, $P_T$) eine hydraulisch, magnetisch oder pneumatisch arbeitende Schalteinrichtung ($Z_R$, $Z_S$, $Z_T$) zugeordnet ist, die mittels der Hilfskontakte ($H_S$, $H_T$) die jeweiligen Phasen (S, T) der zu prüfenden Schaltanlage (14) mit der Meßimpedanz (12) verbindet.

5. Vorrichtung nach Anspruch 4, dadurch gekennzeichnet, daß die hydraulisch, magnetisch oder pneumatisch angetriebenen Schalteinrichtungen ($Z_R$, $Z_S$, $Z_T$) derart steuerbar sind, daß sie die jeweils nicht über den Schaltarm (5) mit der Prüfspannungsquelle verbundenen Phasen (S, T) der zu prüfenden Schaltanlage (14) über die Schalteinrichtungen ($Z_S$, $Z_T$) mit der Meßimpedanz (12) verbinden.

## Claims

1. A device for measurement for detection of partial discharges in polyphase metalclad switchgear with a testing transformer (1) which may be connected to the individual phases (R, S, T) of this switchgear (14) via a polyphase selector switch (3) and with a coupling capacitor ($C_{K1}$, $C_{K3}$) for the production of the return path between the phase (R) to be tested and a measuring impedance (12), whereby as coupling capacitor ($C_{K1}$, $C_{K3}$) the one phase or all of the phases (S, T) of the switchgear (14) not live are employed in such a way that their capacitance with respect to the live phase (R) serves for the coupling-out of the partial discharge pulses, characterized in that the polyphase selector switch (3) exhibits to correspond with the number of phases (R, S, T) a number of switch arms (5, 6, 7) which are offset from one another by an angle corresponding with the round angle divided by the number of phases, that a fixed opposite contact ($P_R$, $P_S$, $P_T$) is associated with each switch arm contact ($E_5$, $E_6$, $E_7$), that one of the switch arms (5) is connected conductively to a test voltage terminal (8) and the other switch arms (6,7) are insulated from it and from one another, and that with each insulated switch

4

arm (6,7) is associated and connected conductively to it a connector contact ($V_6$,$V_7$) which, depending upon the position of the switch arms (5,6,7), may be brought into contact with an auxiliary contact ($H_R$,$H_S$,$H_T$) provided next to a test contact ($P_R$,$P_S$,$P_T$).

2. A device as in Claim 1, characterized in that the switch arms (5,6,7) are directed outwards as seen from the test voltage terminal (8).

3. A device as in Claim 1 or 2, characterized in that the switch arms (5,6,7) may be turned about a shaft (4) supported in a supporting insulator (16).

4. A device for measurement for detection of the partial discharges in polyphase metalclad switchgear with a testing transformer (1) which may be connected to the individual phases (R,S,T) of this switchgear (14) via a polyphase selector switch (3) and with a coupling capacitor ($C_{K1}$,$C_{K3}$) for the production of the return path between the phase (R) to be tested and a measuring impedance (12), whereby as coupling capacitor ($C_{K1}$,$C_{K3}$) the one phase or all of the phases (S,T) of the switchgear (14) not live are employed in such a way that their capacitance with respect to the live phase (R) serves for the coupling-out of the partial discharge pulses, characterized in that the polyphase selector switch (3) exhibits only one switch arm (5) which is connected conductively to a test voltage terminal (8) and depending upon its position at the time connects the opposite contacts ($P_R$,$P_S$,$P_T$) associated with the individual phases (R,S,T) conductively to the test voltage terminal (8), and that with each opposite contact ($P_R$,$P_S$,$P_T$) is associated a hydraulically, magnetically or pneumatically operated switching equipment ($Z_R$,$Z_S$,$Z_T$) which by means of the auxiliary contacts ($H_S$,$H_T$) connects to the measuring impedance (12) the respective phases (S,T) of the switchgear (14) to be tested.

5. A device as in Claim 4, characterized in that the hydraulically, magnetically or pneumatically operated switching equipments ($Z_R$,$Z_S$,$Z_T$) may be controlled in such a way that the phases (S,T) of the switchgear to be tested, which at the time are not connected via the switch arm (5) to the source of test voltage, are connected to the measuring impedance (12) via the switching equipments ($Z_S$,$Z_T$).

**Revendications**

1. Dispositif de détection de charges partielles pour des installations de câblage à haute tension multiphases, à encapsulage métallique, avec un transformateur d'essai (1) raccordable aux phases individuelles (R,S,T) de cette installation de câblage (14), par un convertisseur multiphases (3) et avec un condensateur de couplage ($C_{K1}$, $C_{K3}$), pour construire le retour entre la phase (R) à contrôler et une impédance de mesure (12) en quoi ou bien toutes les phases (S, T) de l'installation de câblage (14), qui ne sont pas sous tension, sont utilisées pour condensateur de couplage ($C_{K1}$,$C_{K3}$)et de telle sorte que leur capacité par rapport à la phase (R) conduisant la tension serve au découplage des impulsions de décharge partielle,caractérisé en ce que le convertisseur multiphases (3) possède un nombre de bras à contact (5, 6, 7) correspondant au nombre des phases (R, S, T) et qui sont décalés les uns par rapport aux autres, d'un angle ayant la valeur de 360° divisé par le nombre des phases, qu'un contre-contact fixe ($P_R$, $P_S$, $P_T$) est affecté à chaque contact de bras à contact ($E_5$, $E_6$, $E_7$), que l'un des bras à contact (5) est relié de manière conductrice à un raccordement de tension de contrôle (8) et que les autres bras à contact (6, 7) sont isolés de celui-ci et entre-eux, et qu'à chaque bras à contact isolé (6, 7) est affecté un contact de liaison ($V_6$, $V_7$), qui est relié à celui-ci de manière conductrice et qui, selon la position des bras à contact (5, 6, 7), réalise un contact avec un contact auxiliaire ($H_R$, $H_S$, $H_T$), qui est prévu à côté d'un contact de contrôle ($P_R$, $P_S$, $P_T$).

2. Dispositif selon la revendication 1, caractérisé en ce que les bras à contact (5, 6, 7), vus depuis le raccordement de tension de contrôle (8) sont orientés vers l'extérieur.

3. Dispositif selon la revendication 1 ou 2, caractérisé en ce que les bras à contact (5, 6, 7) peuvent tourner autour d'un axe (4) placé dans un isolateur support (16).

4. Dispositif de détection de charges partielles pour des installations de câblage à haute tension multiphases, à encapsulage métallique, avec un transformateur de'essai (1) raccordable aux phases individuelles (R,S,T) de cette installation de câblage (14), par un convertisseur multiphases (3) et avec un condensateur de couplage ($C_{K1}$, $C_{K3}$), pour construire le retour entre la phase (R) à contrôler et une impédance de mesure (12), en quoi ou bien toutes les phases (S,T) de l'installation de câblage (14), qui ne sont pas sous tension, sont utilisées pour condensateur de couplage ($C_{K1}$,$C_{K3}$) et de telle sorte que leur capacité par rapport à la phase (R) conduisant la tension serve au découplage des impulsions de décharge partielle, caractérisé en ce que le convertisseur multiphase (3) ne possède qu'un bras à contact (5), qui est relié de manière conductrice au raccordement de tension de contrôle (8) et ques les contre-contacts ($P_R$ $P_S$, $P_T$) qui sont affectés à chacune des phases (R, S, T) sont reliés de manière conductrice, en fonction de chaque position, au raccordement de tension de contrôle (8) et qu'un dispositif de branchement ($Z_R$, $Z_S$, $Z_T$) travaillant hydrauliquement, magnétiquement ou bien pneumatiquement est affecté à chaque contre-contact ($P_R$, $P_S$, $P_T$) et qui relie chacune des phases

5

(S, T) de l'installation de câblage (14) à contrôler à l'impédance des mesure (12), au moyen des contacts auxi-liaires ($H_S$, $H_T$).

5. Dispositif selon la revendication 4, caractérisé en ce que les dispositifs de branchement ($Z_R$, $Z_S$, $Z_T$) qui sont entraînés de manière hydraulique, magnétique ou bien pneumatique, sont commandables, que les phases (S, T) de l'installation de câblage, qui ne sont pas reliées par le bras à contact (5) à la source de tension de contrôle, sont reliées à l'impédance de mesure (12) par les dispostifs de branchement ($Z_S$, $Z_T$).

FIG.1

FIG.3

FIG.2

FIG.4